# EUROPÄISCHE PATENTANMELDUNG

(11) **EP 1 637 866 A1**
(43) Veröffentlichungstag der Anmeldung: **22.03.2006**
(21) Anmeldenummer: 04022376.0
(22) Anmeldetag: 21.09.2004
(51) Int. Cl.: G01N 3/20, G06K 19/07

(54) **Verfahren und Vorrichtung zum Biegetesten von Karten**

(71) Anmelder: VisionCard PersonalisierungsgmbH, 6063 Rum (AT)
(72) Erfinder: Wolny, Robert, 6063 Rum (AT); Schwab, Ronald, 6094 Axams (AT)
(74) Vertreter: Ostermann, Thomas

(57) **Zusammenfassung**

Die Erfindung betrifft eine Verfahren zum Biegetesten von Karten, wobei mittels einer Druckrolle eine Biegekraft im Wesentlichen senkrecht zur Förderebene auf die Karte ausgeübt wird, wobei die Karten (2) während der Förderbewegung derselben entlang eines durch Fördermittel (10, 10', 10', 12, 12") vorgegebnen Förderweges, der sich im Wesentlichen in einer Förderebene (8) erstreckt, durch die die in der Höhe der Förderebene hineinreichende und sich über die gesamte Querrichtung der Karten (2) erstreckende Druckrolle (11) mit einer senkrecht zur Förderebene (8) wirkenden Biegekraft (19, 20) kontinuierlich von einem in Förderrichtung (13) vorderen Ende der Karte (2) bis zu einem in Förderrichtung (13) hinteren Ende der Karte (2) beaufschlagt wird.

## Beschreibung

Die Erfindung betrifft ein Verfahren zum Biegetesten von Karten, wobei mittels einer Druckrolle eine Biegekraft im Wesentlichen senkrecht zur Förderebene auf die Karte ausgeübt wird.

Ferner betrifft die Erfindung eine Vorrichtung zum Biegetesten von Karten, insbesondere von Karten mit integrierten Antennen, mit Fördermitteln zum Bewegen der Karten in einer Förderebene und mit einer Druckrolle zum Ausüben einer senkrecht zur Förderebene wirkenden Biegekraft.

Aus der DE 102 22 211 A1 ist ein Verfahren bzw. eine Vorrichtung zum Biegetesten von Karten bekannt, bei der die Karten stoßartig entlang einer Längs- oder Querachse derselben mit einer Biegebelastung beaufschlagt werden. Hierzu wird die Karte zwischen Aufnahmeschuhe eingespannt, wobei sie mittig auf einem Dorn aufliegt. Nachfolgend werden die Aufnahmeschuhe mittels Pneumatik- oder Hydraulikzylinder um einen vorgegebenen Weg aufeinander zu bewegt, so dass die Karten um einen vorgegebenen Winkel verbogen werden. Das bekannte Verfahren dient zur Überprüfung des Sprödbruchverhaltens der Karten, wobei diese in einem Extrembereich, nämlich zwischen 150° und 180°, gebogen werden. Das bekannte Verfahren dient zur stichprobenhaften Überprüfung der Karten vor der Produktion derselben bzw. produktionsbegleitend.

Aus der DE 196 20 550 Cl sind ein Verfahren und eine Vorrichtung zum Biegetesten von Karten bekannt, bei dem Karten zwischen zwei Backen einer Biegevorrichtung eingespannt und durch Aufeinanderzubewegen derselben gebogen werden. Auch dieses Verfahren kann nur stichprobenhaft produktionsbegleitend eingesetzt werden.

Aus der EP 0 704 819 B1 sind ein Verfahren und eine Vorrichtung zum Biegetesten von Karten bekannt, wobei die Karte mittels einer Halteeinrichtung entlang ihrer Erstreckungsebene gleitend verschiebbar gehalten ist. Die Karte wird in ihrer Erstreckungsebene abwechselnd hin und her bewegt, wobei von einer Flachseite her im Bereich eines Chipbereichs der Karte eine Druckrolle eine Durchbiegung um einen vorgegebenen Weg bewirkt. Nachteilig an dem bekannten Verfahren bzw. der Vorrichtung ist es, dass der Biegetest auf Chipkarten begrenzt ist, da lediglich eine punktuelle Durchbiegung im Bereich des Chips der Karte vorgenommen wird. Ferner ist das bekannte Verfahren relativ zeitintensiv, was eine Integration des Biegetests in den Produktionsprozess erschwert.

Aufgabe der vorliegenden Erfindung ist es, ein Verfahren und eine Vorrichtung zum Biegetesten von Karten derart anzugeben, dass insbesondere Karten mit integrierten Antennen einfach und schnell auf Funktionsfähigkeit geprüft werden können, wobei der Biegetest in den Produktionsprozess integrierbar ist.

Zur Lösung dieser Aufgabe ist die Erfindung in Verbindung mit dem Oberbegriff des Patentanspruchs 1 dadurch gekennzeichnet, dass die Karten während der Förderbewegung derselben entlang eines durch Fördermittel vorgegebnen Förderweges, der sich im Wesentlichen in einer Förderebene erstreckt, durch die die in der Höhe der Förderebene hineinreichende und sich über die gesamte Querrichtung der Karten erstreckende Druckrolle mit einer senkrecht zur Förderebene wirkenden Biegekraft kontinuierlich von einem in Förderrichtung vorderen Ende der Karte bis zu einem in Förderrichtung hinteren Ende der Karte beaufschlagt wird.

Der besondere Vorteil des erfindungsgemäßen Verfahrens besteht darin, dass zum einen die Verbiegung der Karte während der gleichförmigen Bewegung derselben in eine einzige vorgegebene Förderrichtung erfolgt. Hierdurch kann die Dauer des Biegetestes wesentlich reduziert werden, da die Biegekraft durch eine sich drehende Druckrolle erzeugt wird. Der Biegetest kann somit in den Produktionsprozess integriert werden, wobei jede hergestellte Karte diesem Biegetest unterzogen wird. Zum anderen erfolgt eine vollständige Biegeprüfung der Karte, da alle in Förderrichtung verlaufende Kartenabschnitte mit der Biegebelastung beaufschlagt werden. Die Biegebeanspruchung erfolgt über die gesamte Querrichtung der Karte, so dass eine gleichmäßige Verbiegung um eine senkrecht zur Förderrichtung verlaufende Achse durchgeführt wird.

Nach einer Weiterbildung des erfindungsgemäßen Verfahrens können zum einen gleichzeitig unterschiedliche Kartenabschnitte mit einer Biegebelastung beaufschlagt werden. Hierdurch kann der Biegegrad der Karte erhöht werden, ohne dass die örtliche Verbiegung in dem jeweiligen Kartenabschnitt zu groß ist. Zum anderen können gleiche Kartenabschnitte während eines Durchlaufs nachfolgend mehrfach mit einer Biegebelastung beaufschlagt werden, so dass sich der Biegetest in Förderrichtung wiederholen lässt und damit ein zuverlässiges Biegetestergebnis erzielbar ist. Vorteilhaft ergibt sich somit eine verteilte und schnelle Biegeprüfung, die zeiteffektiv und relativ Platz sparend ist. Es wird eine Integration in den Produktionsprozess ermöglicht, wobei eine relativ geringe kartenabschnittsweise Auslenkung erfolgt, und die Gesamtauslenkung wesentlich größer ist.

Nach einer Weiterbildung des erfindungsgemäßen Verfahrens werden die Karten in Förderrichtung wellenförmig oder sinusförmig entsprechend einer vorgebbaren Amplitude bewegt. Vorteilhaft kann hierdurch eine Verbiegung in unterschiedliche Richtungen im Vergleich zur Flachseite der Karte ermöglicht werden.

Zur Lösung dieser Aufgabe ist die Erfindung in Verbindung mit dem Oberbegriff des Patenanspruchs 4 dadurch gekennzeichnet, dass mindestens eine Druckrolle und eine Mehrzahl von Fördermitteln derart zueinander angeordnet sind, dass jede Karte fortlaufend entlang einer vorgegebenen Förderrichtung auf Biegefestigkeit geprüft wird.

Der besondere der erfindungsgemäßen Vorrichtung besteht darin, dass durch die Kombination einer Druckrolle sowie von Fördermitteln ein Biegetest ermöglicht wird, der in den Produktionsprozess der Karten integrierbar ist.

Nach einer Weiterbildung der erfindungsgemäßen Vorrichtung weisen die Fördermittel Förderbänder auf, die zum einen an einer flächigen Oberseite und zum anderen an einer flächigen Unterseite der Karte anliegen. Die Förderbänder sind als Endlosbänder ausgebildet und liegen auf Förderrollen an, die zusammen mit der Druckrolle von einer gemeinsamen Antriebseinheit angetrieben werden. Hierdurch kann die Ansteuerung vereinfacht werden.

Weitere Vorteile der Erfindung ergeben sich aus den weiteren Unteransprüchen.

Ein Ausführungsbeispiel der Erfindung wird anhand der Zeichnungen näher erläutert.

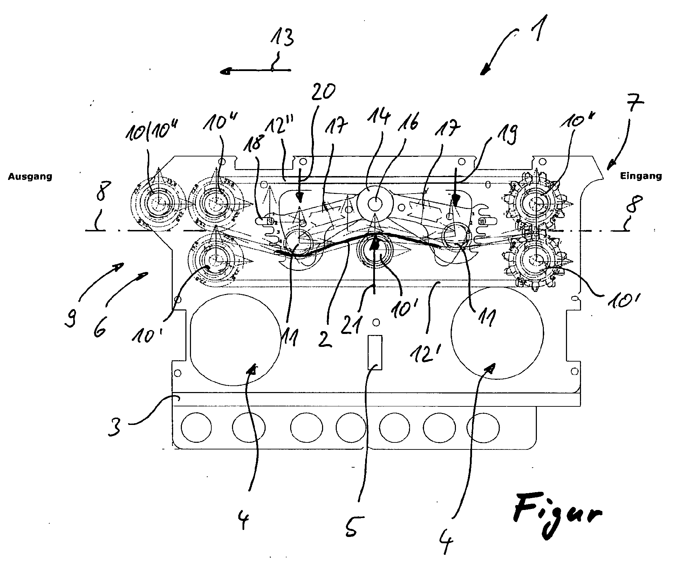

Die Zeichnung zeigt:
- Figur: schematische Seitenansicht einer Vorrichtung zum Biegetesten von Karten.

Eine Vorrichtung 1 zum Biegetesten von Karten 2, insbesondere von Karten enthaltend einen Transponder mit einer Antenne, besteht im Wesentlichen aus einem Gestell 3, das in einem unteren Bereich eine Antriebseinheit 4 und eine Steuereinheit 5 und in einem oberen Bereich eine Fördereinheit 6 aufweist. An einem Eingang 7 der Fördereinheit 6 ist ein nicht dargestelltes Magazinfach ankoppelbar, in dem eine Mehrzahl von Karten 2 gestapelt sind und nacheinander in einer Förderebene 8 zur Aufnahme in die Fördereinheit 6 bereitgestellt werden.

An einem Ausgang 9 der Fördereinheit 6 kann ein nicht dargestelltes Kartenablagefach vorgesehen sein, dass die am Ausgang 9 ausgeworfenen Karten 2 aufnimmt und sammelt.

Alternativ kann die erfindungsgemäße Vorrichtung 1 in den Produktionsprozess so integriert sein, dass sich am Eingang 7 und am Ausgang 9 der Fördereinheit 6 unmittelbar produktionserforderliche Module, wie beispielsweise elektronische oder optische Personalisierungsmodule, anschließen. Die Förderrollen 10, 10', 10" und die Förderbänder 12', 12" bilden Fördermittel zur Durchleitung der Karten 2 vom Eingang 7 zum Ausgang 9 der Fördereinheit 6.

Die Fördereinheit 6 besteht aus einer Mehrzahl von Förderrollen 10 sowie zwei Druckrollen 11, wobei um die unteren Förderrollen 10' ein unteres Endlos-Förderband 12' und über die oberen Förderrollen 10' sowie die Druckrollen 11 ein oberes Endlos-Förderband 12'' umläuft. Die Karten 2 werden am Eingang 7 der Fördereinheit 6 unter Anlage einer flächigen Oberseite der Karte 2 an ein Untertrum des oberen Förderbandes 12' und unter Anlage einer flächigen Unterseite der Karte 2 an ein Obertrum des unteren Förderbandes 12' erfasst und in Förderrichtung 13 zum Ausgang 9 der Fördereinheit 6 bewegt.

Im vorliegenden Ausführungsbeispiel sind zwei Druckrollen 11 vorgesehen, die mittels einer zangenförmigen Verstelleinheit 14 von oben in die durch die am Eingang 7 sowie am Ausgang 9 paarweise angeordneten Förderrollen 10', 10'' definierte Förderebene 8 eingreift und somit eine Verbiegung der Karten 2 nach unten hin bewirkt. Zu diesem Zweck weist die Verstelleinheit 14 ein mittleres Drehgelenk 16 auf, von dem zwei Gelenkarme 17 jeweils zu der Druckrolle 11 verlaufen. Durch Verstellung der Gelenkarme 17 um einen vorgegebenen spitzen Winkel zu einer Horizontalebene kann die Biegekraft, die auf die Karten 2 wirken soll, individuell eingestellt werden. Die Gelenkarme 17 weisen an ihren freien Enden Zähne auf, mittels derer sie mit einem fest mit dem Gestell 3 verbundenen Halteelement 18 verrastbar sind. Im vorliegenden Ausführungsbeispiel ist der dem Ausgang 9 zugewandte Gelenkarm 17 um eine Zahnbreite tiefer eingestellt als der dem Eingang 7 der Fördereinheit 6 zugewandte weitere Gelenkarm 17. Die drehbar in den Gelenkarmen 17 gelagerten Druckrollen 11 ermöglichen somit, dass die zugeführten Karten 2 in einem ersten Zeitabschnitt mit einer ersten Biegekraft 19 und in einem zweiten Abschnitt mit einer zweiten Biegekraft 20, die größer ist als die erste Biegekraft 19, beaufschlagt werden.

Eine zwischen den Druckrollen 11 angeordnete mittlere Förderrolle 10' bewirkt, dass die Karten 2 zusätzlich eine Verbiegung in entgegen gesetzte Richtung erfahren. Dies wird dadurch erzeugt, dass sich die mittlere Förderrolle 10 in einer Ebene erstreckt, wobei der Umfangsrand derselben zumindest die Förderebene 8 erreicht bzw. nach oben hin überschreitet. Hierdurch wird eine dritte Biegekraft 21 erzeugt, die in vertikaler Richtung nach oben gerichtet ist.

Durch Wahl des Abstandes der Druckrollen 11 bzw. der Förderrollen 10, 10', 10" in horizontaler Richtung zueinander kann bewirkt werden, dass unterschiedliche Kartenabschnitte gleichzeitig einer gleichgerichteten oder entgegen gesetzten Biegekraft 19, 20, 21 ausgesetzt werden. Insbesondere kann die kartenabschnittsweise Auslenkung begrenzt werden, wobei durch Ansetzen mehrerer Biegekräfte in unterschiedlichen Kartenabschnitten die Gesamtauslenkung bzw. die Gesamtverbiegung (Biegegrad) erhöht wird. Eine Verzögerung der Fördergeschwindigkeit während der Durchbiegung ist somit nicht erforderlich, so dass die erfindungsgemäße Vorrichtung in den Produktionsprozess integriert werden kann.

Im vorliegenden Ausführungsbeispiel werden die Karten 2 wellenförmig bzw. sinusförmig durch die Fördereinheit 6 geleitet, wobei gleichzeitig Biegekräfte 19, 21, die senkrecht zur Förderrichtung 13 orientiert sind, in unterschiedliche (entgegen gesetzte) Richtungen wirken.

Die Druckrollen 11 erstrecken sich über die gesamte Breite (Quererstreckung) der Fördereinheit 6 und korrespondieren zur Quererstreckung der durchgeleiteten Karten 2. Die Karten 2 werden somit mehrmals um senkrecht zur Förderrichtung 13 und den Biegekräften 19, 20, 21 orientierten Querachse verbogen.

Die Antriebseinheit 4 besteht im Wesentlichen aus einem Elektromotor, der über nicht dargestellte Kopplungsmittel eine oder mehrere Förderrollen 10, 10', 10'' sowie die Druckrollen 11 antreibt. Die Steuereinheit 5 dient zur Einstellung der Fördergeschwindigkeit, die bedarfsweise beim Zugang der Karten 2 beispielsweise kurzzeitig auf Null reduziert werden kann. In der Regel erfolgt der Durchlauf der Karten 2 durch die Fördereinheit 6 bei einer konstanten Fördergeschwindigkeit, so dass eine gleichmäßige und stetige Verbiegung der Karten 2 erfolgen kann.

## Patentansprüche

1. Verfahren zum Biegetesten von Karten, wobei mittels einer Druckrolle eine Biegekraft im Wesentlichen senkrecht zur Förderebene auf die Karte ausgeübt wird, **dadurch gekennzeichnet, dass** die Karten (2) während der Förderbewegung derselben entlang eines durch Fördermittel (10, 10', 10', 12, 12'') vorgegebnen Förderweges, der sich im Wesentlichen in einer Förderebene (8) erstreckt, durch die die in der Höhe der Förderebene hineinreichende und sich über die gesamte Querrichtung der Karten (2) erstreckende Druckrolle (11) mit einer senkrecht zur Förderebene (8) wirkenden Biegekraft (19, 20) kontinuierlich von einem in Förderrichtung (13) vorderen Ende der Karte (2) bis zu einem in Förderrichtung (13) hinteren Ende der Karte (2) beaufschlagt wird.

2. Verfahren nach Anspruch 1, **dadurch gekennzeichnet, dass** die Karten (2) durch die in der Höhe versetzte Anordnung der Druckrolle (11) und der Fördermittel (10, 10', 10', 12, 12'') gleichzeitig in unterschiedlichen Kartenabschnitten oder nachfolgend in gleichen Kartenabschnitten mit mindestens zwei in entgegengesetzt gerichteten oder gleichgerichteten Biegekräften beaufschlagt werden.

3. Verfahren nach Anspruch 1 oder 2, **dadurch gekennzeichnet, dass** die Karten (2) in Förderrichtung (13) wellenförmig bewegt werden.

4. Vorrichtung zum Biegetesten von Karten, insbesondere von Karten mit integrierten Antennen, mit Fördermitteln zum Bewegen der Karten in einer Förderebene und mit einer Druckrolle zum Ausüben einer senkrecht zur Förderebene wirkenden Biegekraft, **dadurch gekennzeichnet, dass** mindestens eine Druckrolle (11) und eine Mehrzahl von Fördermitteln (10, 10', 10', 12, 12'') derart zueinander angeordnet sind, dass jede Karte (2) fortlaufend entlang einer vorgegebenen Förderrichtung (13) auf Biegefestigkeit geprüft wird.

5. Vorrichtung nach Anspruch 4, **dadurch gekennzeichnet, dass** mindestens zwei Druckrollen (11) und die Fördermittel (10, 10', 10', 12, 12'') derart zueinander angeordnet sind, dass die Karten (2) bei der Förderbewegung in zwei entgegengesetzte und/oder zwei gleichgerichtete Richtungen, die senkrecht zur Förderrichtung (13) orientiert sind, verbogen werden.

6. Vorrichtung nach Anspruch 4 oder 5, **dadurch gekennzeichnet, dass** die Druckrolle (11) zumindest senkrecht verstellbar zu der Förderebene (8) angeordnet ist, so dass der Prüfungsgrad der Biegefestigkeit der Karten (2) veränderbar ist.

7. Vorrichtung nach einem der Ansprüche 4 bis 6, **dadurch gekennzeichnet, dass** die zwei Druckrollen (11) mittels einer zangenförmigen Verstelleinheit (14) abhängig oder unabhängig voneinander in eine unterschiedliche Ebene verstellbar sind.

8. Vorrichtung nach einem der Ansprüche 4 bis 7, **dadurch gekennzeichnet, dass** die Fördermittel sich in Förderrichtung (13) erstreckende Förderbände (12', 12") umfassen, die zum einen an einer flächigen Oberseite und zum anderen an einer flächigen Unterseite der Karten (2) anliegen.

9. Vorrichtung nach einem der Ansprüche 4 bis 8, **dadurch gekennzeichnet, dass** die Förderbänder (12', 12") und die Druckrolle (11) von einer gemeinsamen Antriebseinheit (4) angetrieben werden.

10. Vorrichtung nach einem der Ansprüche 4 bis 9, **dadurch gekennzeichnet, dass** die Karten (2) mit einer konstanten Fördergeschwindigkeit in Förderrichtung (13) bewegt werden.
